# EUROPEAN PATENT SPECIFICATION

(11) **EP 3 637 974 B1**
(45) Date of publication and mention of the grant of the patent: **18.08.2021**
(21) Application number: 18715440.6
(22) Date of filing: 16.03.2018
(51) Int. Cl.: A01C 7/04

(54) **SYSTEMS AND METHODS FOR DEPOSITING SEEDS IN A GROW POD**
SYSTEME UND VERFAHREN ZUR ABLAGE VON SAATGUT IN EINE WACHSTUMSSCHALE
SYSTÈMES ET PROCÉDÉS DE DÉPÔT DE GRAINES DANS UNE BARQUETTE DE CULTURE

(30) Priority: 14.06.2017 US 201762519593 P; 14.06.2017 US 201762519352 P; 14.06.2017 US 201762519605 P; 15.03.2018 US 201815922011
(43) Date of publication of application: 22.04.2020
(73) Proprietor: Grow Solutions Tech LLC, Vineyard, Utah 84059 (US)
(72) Inventor: MILLAR, Gary Bret, Highland, Utah 84003 (US)
(74) Representative: Zacco Sweden AB
(86) International application number: PCT/US2018/022960
(87) International publication number: WO 2018/231309

(56) References cited:
- WO-A1-88/03357
- DE-A1- 3 127 051
- DE-A1- 3 906 578
- US-A- 943 634
- US-A- 2 790 548
- US-A- 5 758 477

## Description

### TECHNICAL FIELD

Embodiments described herein generally relate to systems and methods for depositing plant seeds and, more specifically, to systems and methods for depositing seeds into cells of a tray coupled to a cart supported on a track of an industrial grow pod.

### BACKGROUND

Historically, farming has involved a human manually planting a seed into the ground. As farming technologies have developed, some solutions automated this process of using a machine to plant seeds into the ground. However, such current solutions do not allow for the precision placement of seeds into cells of a tray coupled to a cart supported on a track of an industrial grow pod at a speed that does not hinder forward movement of the cart as it moves along the track. As such, a need exists in the industry.
DE 31 27 051 discloses an arrangement for individually distributing seeds. A container has at a lower area an outlet lock covering an opening which can be closed with an outlet slide.

### SUMMARY

Devices, systems, and methods for depositing plant seeds are described. According to the invention the device includes a seeder head having a body having a proximal end and a distal end spaced a distance from the proximal end, a bore extending through an interior of the body from the proximal end to the distal end, a first hold arm disposed within the bore between the proximal end and the distal end, the first hold arm coupled to a first actuator, and a second hold arm disposed within the bore between the distal end and the first hold arm, the second hold arm coupled to a second actuator. The bore includes a proximal opening at the proximal end and a distal opening at the distal end, and is shaped and sized to receive a plurality of seeds at the proximal opening. The first hold arm and the second hold arm are movable by the first actuator and the second actuator to selectively allow one or more of the plurality of seeds to fall under force of gravity to the distal opening of the bore.

According to a further aspect of the invention, a method according to claim 7 is disclosed.

According to an embodiment, a seeder component in an assembly line grow pod includes a seeder computing device and a seeder head. The seeder head includes a body having a proximal end and a distal end spaced a distance from the proximal end, a bore extending through an interior of the body from the proximal end to the distal end, a first hold arm disposed within the bore between the proximal end and the distal end, the first hold arm coupled to a first actuator that is communicatively coupled to the seeder computing device, and a second hold arm disposed within the bore between the distal end and the first hold arm, the second hold arm coupled to a second actuator that is communicatively coupled to the seeder computing device. The bore includes a proximal opening at the proximal end and a distal opening at the distal end, and is shaped and sized to receive a plurality of seeds at the proximal opening. The seeder computing device directs the first actuator to move the first hold arm and the second actuator to move the second hold arm to selectively allow one or more of the plurality of seeds to fall to the distal opening of the bore.

These and additional features provided by the embodiments of the present disclosure will be more fully understood in view of the following detailed description, in conjunction with the drawings.

### BRIEF DESCRIPTION OF THE DRAWINGS

The embodiments set forth in the drawings are illustrative and exemplary in nature and not intended to limit the disclosure. The following detailed description of the illustrative embodiments can be understood when read in conjunction with the following drawings, where like structure is indicated with like reference numerals and in which:
FIG. 1 schematically depicts a perspective view of an illustrative assembly line grow pod having a seeder component according to one or more embodiments shown and described herein;
FIG. 2 depicts a block diagram of illustrative hardware components of a seeder computing device within a seeder component of an assembly line grow pod according to one or more embodiments shown and described herein;
FIG. 3 schematically depicts a side view of an illustrative seeding device of a seeder component of an assembly line grow pod according to one or more embodiments shown and described herein;
FIG. 4 schematically depicts a side view of an illustrative seeder head of a seeding device in a seeder component of an assembly line grow pod according to one or more embodiments shown and described herein;
FIG. 5 schematically depicts a cutaway side view of an illustrative seeder head of a seeding device in a seeder component of an assembly line grow pod according to one or more embodiments shown and described herein;
FIG. 6 depicts a flow diagram of an illustrative method of seed movement through a seeder head according to one or more embodiments shown and described herein;
FIG. 7 depicts a flow diagram of an illustrative method of depositing one or more seeds at a target location according to one or more embodiments shown and described herein;
FIG. 8 schematically depicts a cutaway side view of an illustrative seeder head in an initial position according to one or more embodiments shown and described herein;
FIG. 9 schematically depicts a cutaway side view of an illustrative seeder head with a retracted first hold arm according to one or more embodiments shown and described herein;
FIG. 10 schematically depicts a cutaway side view of an illustrative seeder head after retraction of a first hold arm according to one or more embodiments shown and described herein;
FIG. 11 schematically depicts a cutaway side view of an illustrative seeder head in a seed priming position with a first hold arm and a second hold arm engaged according to one or more embodiments shown and described herein;
FIG. 12. schematically depicts a cutaway side view of an illustrative seeder head with a retracted second hold arm according to one or more embodiments shown and described herein;
FIG. 13 schematically depicts a cutaway side view of an illustrative seeder head in a seed deposition position with a first hold arm and a second hold arm engaged according to one or more embodiments shown and described herein;
FIG. 14A schematically depicts a cutaway side view of an illustrative seeder head upon actuation of a vibrating mechanism according to one or more embodiments shown and described herein; and
FIG. 14B schematically depicts a cutaway side view of an illustrative seeder head after actuation of a vibrating mechanism that causes one or more seeds to become dislodged from a stuck position according to one or more embodiments shown and described herein.

### DETAILED DESCRIPTION

Embodiments disclosed herein include devices, systems, and methods for precisely placing one or more seeds into each cell of a plurality of cells located in a tray coupled to a cart that is supported on a track of an industrial grow pod. The devices, systems, and methods described herein complete this precise placement of seeds in a manner that allows all of the plurality of cells to receive the seed in an amount of time that does not hinder movement of the cart along the track in the industrial grow pod. As a result, the industrial grow pod is able to continue functioning to allow the seeds to germinate and grow into plants before harvesting and repeating the seeding process. The devices, systems, and methods for seeding that incorporate the same will be described in more detail, below.

A seed may include an embryonic plant that is enclosed in a protective outer coating. The seeds described herein may be for any plant species, and is not limited to a particular plant species. In some embodiments, the seeds may be for agricultural crop plants, such as, for example, rice, wheat, sugarcane, maize, soybeans, potatoes, cassava, legumes, sunflowers, rape, mustard, millet, sorghum, and the like. While the term "seed" is generally used herein, it should be understood that the systems and methods described herein may also be used for other plant tissue, such as bulbs, roots, tubers, corms, rhizoids, rhizomes, berries, capsules, and the like. The term "seed" may also be used herein to encompass certain portions of a plant seed, such as, for example, endosperm (or other storage tissue), an embryo, a seed covering (e.g., a pericarp and/or an exocarp), and the like. In addition, the term "seed" may also be used to describe a starting component (e.g., a spore or the like) for growing other life forms, such as fungi and the like.

While crop growth technologies have advanced over the years, there are still many problems in the farming and crop industry today. As an example, while technological advances have increased efficiency and production of various crops, many factors may affect a harvest, such as weather, disease, infestation, and the like. Additionally, while certain countries may currently have suitable farmland to adequately provide food for certain populations, other countries and future populations may not have enough farmland to provide the appropriate amount of food. As a result, industrial grow pods have been developed that allow for growing of crops in a smaller amount of space than what would typically be required of a farm. However, improvement of the various components of the industrial grow pod is needed.

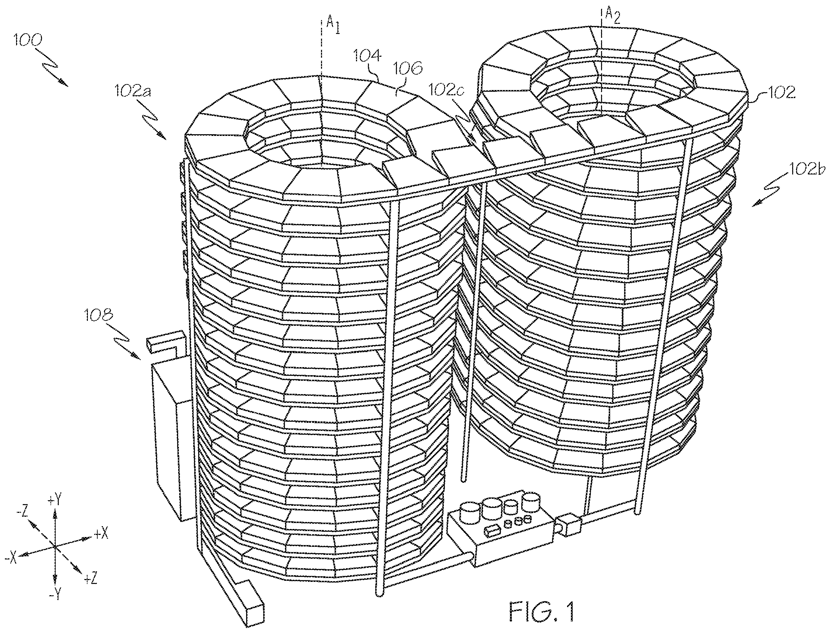

An illustrative industrial grow pod that allows for growing of crops is depicted herein. Particularly, FIG. 1 depicts a perspective view of an illustrative assembly line grow pod 100 having a seeder component according to one or more embodiments shown and described herein. As illustrated, the assembly line grow pod 100 may include a track 102 that holds one or more carts 104. The track 102 may include at least an ascending portion 102a, a descending portion 102b, and a connection portion 102c. The track 102 may wrap around (e.g., in a counterclockwise direction, as shown in FIG. 1) a first axis A₁ such that the carts 104 ascend upward in a vertical direction (i.e., in the +y direction of the coordinate axes of FIG. 1). The connection portion 102c may be relatively level (although this is not a requirement) and is utilized to transfer carts 104 to the descending portion 102b. The descending portion 102b may be wrapped around a second axis A₂ (e.g., in a counterclockwise direction, as shown in FIG. 1) that is substantially parallel to the first axis A₁, such that the carts 104 may be returned closer to a ground level.

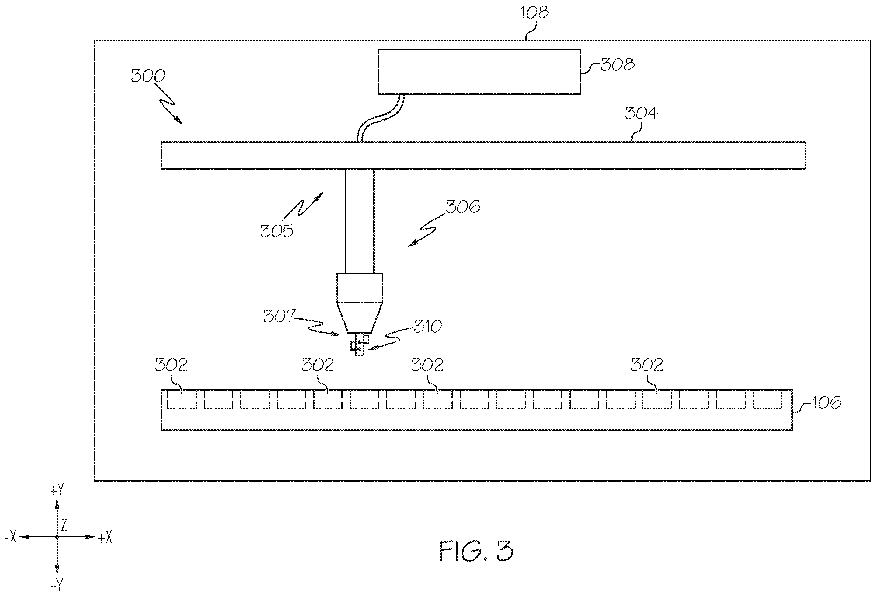

Supported on each one of the carts 104 is a tray 106. The tray 106 may generally contain one or more components for holding seeds as the seeds germinate and grow as the cart 104 traverses the ascending portion 102a, the descending portion 102b, and the connection portion 102c of the track 102 of the assembly line grow pod 100. In one nonlimiting example, each tray 106 may have a single section (or cell) for receiving a plurality of seeds. In another nonlimiting example, each tray 106 may have a plurality of sections (or cells), each of which receives one or more seeds. Additional details regarding the cells in the tray 106 are described in greater detail with respect to FIG. 3 below.

Still referring to FIG. 1, the assembly line grow pod 100 may include a seeder component 108 in various embodiments. The seeder component 108 may be a device or system that is particularly configured to provide seeds to each tray 106 as the tray 106 passes through or moves adjacent to the seeder component 108 in the assembly line. For example, the seeder component 108 may detect a presence of the cart 104 and/or the tray 106 and may place one or more seeds in a particular an area of the tray 106. The seeds may be placed in the tray 106 at a particular depth, such that a particular number of seeds are located in the tray 106, in a particular arrangement (e.g., such that a surface area of the tray 106 includes a particular number of seeds), such that a particular number of seeds are in a particular section (or cell), and/or according to other criteria. In some embodiments, the seeds may be pretreated with nutrients and/or anti-buoyancy agents (such as water) as these embodiments may not utilize soil to grow the seeds and thus may necessitate having the seeds submerged.

It should be understood that the assembly line grow pod 100 may include additional components not specifically described herein, and the present disclosure is not limited solely to the components described herein. Illustrative additional components may include, but are not limited to, watering components, lighting components, airflow components, growth monitoring components, harvesting components, washing and/or sanitizing components, and/or the like.

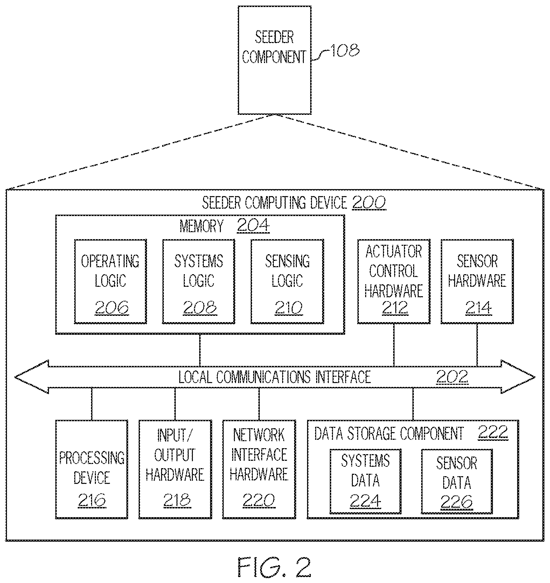

The seeder component 108 may have a control system that controls the various functions of the seeder component 108, including providing seeds to each tray 106, detecting the presence of the cart 104 and/or the tray 106 thereon, ensuring an appropriate number of seeds are deposited within the tray 106 (and in an appropriate location within each tray 106) ensuring that the speed of depositing seeds is aligned with and/or corresponds to the speed of cart 104 movement, and/or the like. Such a control system may be, for example, a computing device that is integrated within the seeder component 108 or coupled to the seeder component 108. FIG. 2 depicts a block diagram of illustrative hardware components of a seeder computing device 200 within the seeder component 108. As illustrated, the seeder computing device 200 includes a memory component 204, actuator control hardware 212, sensor hardware 214, a processing device 216, input/output hardware 218, network interface hardware 220, and a data storage component 222 (which stores systems data 224, sensor data 226, and/or other data).

Each of the components of the computing device 130 may be communicatively coupled to a local interface 202. The local interface 202 is generally not limited by the present disclosure and may be implemented as a bus or other communications interface to facilitate communication among the components of the seeder computing device 200 coupled thereto.

The memory component 204 may be configured as volatile and/or nonvolatile memory and as such, may include random access memory (including SRAM, DRAM, and/or other types of RAM), flash memory, secure digital (SD) memory, registers, compact discs (CD), digital versatile discs (DVD), Blu-Ray discs, and/or other types of non-transitory computer-readable mediums. Depending on the particular embodiment, these non-transitory computer-readable mediums may reside within the seeder computing device 200 and/or external to the seeder computing device 200. The memory component 204 may store, for example, operating logic 206, systems logic 208, and sensing logic 210. The operating logic 206, the systems logic 208, and the sensing logic 210 may each include a plurality of different pieces of logic, each of which may be embodied as a computer program, firmware, and/or hardware, as an example.

The operating logic 206 may include an operating system and/or other software for managing components of the seeder computing device 200. As also discussed above, the systems logic 208 and the sensing logic 210 may reside in the memory component 204 and may be configured to provide programming instructions for providing the functionality of the seeder component 108, as described herein. For example, the systems logic 208 may include logic components for causing components within the seeder component 108 to deposit seeds. In another example, the sensing logic 210 may include logic components for receiving data from various sensors and completing one or more processes in response to the received data, as described herein.

The actuator control hardware 212 may generally include one or more processing devices, one or more motors, one or more actuators, and/or the like that are configured to receive a signal and cause an actuator to move in response to a signal. For example, the actuator control hardware 212 may be a control component located on a linear actuator that, in response to receiving a signal, causes the linear actuator to extend or retract.

The sensor hardware 214 may include one or more sensors that are positioned within the seeder component 108 to sense various characteristics of components within the seeder component 108. For example, the sensor hardware 214 may be hardware that is positioned and configured to sense a location of a cart and/or tray within the seeder component 108, sense whether a seed has been ejected into a tray (including a location within the tray), sense a number of seeds that have been ejected, sense whether seeds are lodged or stuck within components, and/or the like. A nonlimiting example of sensor hardware 214 may be an optical sensor. However, other sensors that are configured to sense various characteristics described herein are contemplated and included within the scope of the present disclosure.

The processing device 216 may include any processing component operable to receive and execute instructions (such as from the data storage component 222 and/or the memory component 204). Illustrative examples of the processing device 216 include, but are not limited to, a computer processing unit (CPU), a many integrated core (MIC) processing device, an accelerated processing unit (APU), a digital signal processor (DSP). In some embodiments, the processing device 216 may be a plurality of components that function together to provide processing capabilities, such as integrated circuits (including field programmable gate arrays (FPGA)) and the like.

The input/output hardware 218 may include and/or be configured to interface with microphones, speakers, a display, and/or other hardware. That is, the input/output hardware 218 may interface with hardware that provides a user interface or the like. For example, a user interface may be provided to a user for the purposes of adjusting settings (e.g., the number of seeds that are deposited in a cell), viewing a status (e.g., receiving a notification of a blockage, a status of the seeder component 108, etc.), and/or the like.

The network interface hardware 220 may include and/or be configured for communicating with any wired or wireless networking hardware, including an antenna, a modem, LAN port, wireless fidelity (Wi-Fi) card, WiMax card, ZigBee card, Bluetooth chip, USB card, mobile communications hardware, and/or other hardware for communicating with other networks and/or devices. From this connection, communication may be facilitated between the seeder computing device 200 and other computing devices, such as user computing devices and/or remote computing devices.

The data storage component 222 may generally be any medium that stores digital data, such as, for example, a hard disk drive, a solid state drive (SSD), a compact disc (CD), a digital versatile disc (DVD), a Blu-Ray disc, and/or the like. It should be understood that the data storage component 222 may reside local to and/or remote from the seeder computing device 200 and may be configured to store one or more pieces of data and selectively provide access to the one or more pieces of data. As illustrated in FIG. 2, the data storage component 222 may store systems data 224, sensor data 226, and/or other data, as described in greater detail herein.

It should be understood that while the components in FIG. 2 are illustrated as residing within the seeder computing device 200, this is merely an example. In some embodiments, one or more of the components may reside external to the seeder computing device 200. It should also be understood that, while the seeder computing device 200 is illustrated as a single device, this is also merely an example. That is, the seeder computing device 200 may be a plurality of devices that are communicatively coupled to one another and provide the functionality described herein.

Additionally, while the seeder computing device 200 is illustrated with the various logic components (e.g., the operating logic 206, the systems logic 208 and the sensing logic 210) and data components (e.g., the systems data 224 and the sensor data 226) as separate components, this is also an example. In some embodiments, a single piece of logic (and/or a plurality of linked modules) and/or a single data component (and/or a plurality of linked modules) may also cause the seeder computing device 200 to provide the functionality described herein.

Referring now to FIG. 3, a side view of an illustrative seeding device 300 of the seeder component 108 is schematically depicted. The seeding device 300 generally includes a seed tank 308 fluidly coupled to a seed dispenser 306 having a seeder head 310. While only a single seed tank 308, seed dispenser 306, and seeder head 310 are depicted in FIG. 3, it should be understood that the present disclosure is not limited to such. For example, the seeding device 300 may include a plurality of seed tanks 308, a plurality of seed dispensers 306, and/or a plurality of seeder heads 310 (e.g., at least a first seeder head and a second seeder head). In another example, the seeding device 300 may have a single seed tank 308 coupled to a plurality of seed dispensers 306, each having an associated seeder head 310. In yet another example, the seeding device 300 may include one or more seed tanks 308 coupled to one or more seed dispensers 306, where each of the one or more seed dispensers 306 has a plurality of seeder heads 310 (e.g., at least a first seeder head and a second seeder head).

The seed tank 308 may generally provide storage for a plurality of seeds and provide seeds to the seed dispenser 306 for dispensing. For example, the seeds may be delivered to the seed dispenser 306 as needed such that the seeds are dispensed via the seeder head 310, as described in greater detail herein. The seed tank 308 is otherwise not limited by this disclosure and may be any vessel that stores seeds and provides the seeds to the seed dispenser 306.

The seed dispenser 306 may generally be positioned over the tray 106 when the tray 106 enters the seeder component 108 or moves to a location adjacent to the seeder component 108. That is, the seed dispenser 306 may be located above the tray 106 (i.e., in the +y direction of the coordinate axes of FIG. 3 relative to the tray 106) such that seeds dispensed from the seed dispenser 306 fall under force of gravity into cells 302 located in the tray 106, as described in greater detail herein. As such, the seed dispenser 306 may be arranged such that each seeder head 310 is aligned or alignable with a portion of the tray 106, such as a cell 302 within the tray 106. In some embodiments, the seed dispenser 306 may be arranged such that the number of seeder heads 310 corresponds to the number of cells 302 in the tray 106 and the location of each of the seeder heads 310 corresponds to the location of the cells 302 in the tray 106 such that all of the seeder heads 310 dispense seeds into the tray 106 at substantially the same time.

In some embodiments, the seed tank 308 and the seed dispenser 306 may be integrated into a single component. That is, a single component holds the seeds to be provided to the seeder head 310 (or plurality of seeder heads 310) and supports the seeder head 310 (or plurality of seeder heads 310) thereon. For example, the integrated device may be a rotating drum having a plurality of seeder heads 310 attached thereto.

The seed dispenser 306 may be coupled at a proximal end 305 thereof to one or more supports 304 located above the tray 106 (i.e., in the +y direction of the coordinate axes of FIG. 3 relative to the tray 106) such that the seed dispenser 306 is suspended from the one or more supports 304 above the tray 106. The one or more supports 304 are not limited by this disclosure, and may generally be any device, component, or the like that supports the seed dispenser 306. Illustrative examples of the one or more supports 304 include, but are not limited to, a beam, a crane, a gantry, and/or the like. In some embodiments, the one or more supports 304 may be movable, as described in greater detail herein. In other embodiments, the one or more supports 304 may be stationary or fixed in position.

In some embodiments, various portions of the seeding device 300 may be movable so as to position the seeder head 310 above the cells 302 of the tray 106. In one nonlimiting example, the seed dispenser 306 may move relative to one or more components (e.g., the one or more supports 304 and/or the tray 106) such that the seeder head 310 is positioned over a particular area that is to receive one or more seeds. In another nonlimiting example, the one or more supports 304 may be movable supports that are capable of moving the seed dispenser 306 relative to the tray 106. In yet another nonlimiting example, the tray 106 may move (i.e., along the track 102 (FIG. 1)) while the various components of the seeding device 300 remain in a static position. It should be understood that any combination of the above-mentioned examples are contemplated and included in the scope of the present disclosure. For example, both the one or more supports 304 and the seed dispenser 306 may move relative to the tray 106 and the tray 106 may move along the track 102 (FIG. 1) relative to the seeding device 300.

The mechanism or device that is used to couple the seed dispenser 306 to the supports 304 and/or move the seed dispenser 306 relative to the supports 304 is not limited by this disclosure, and can be any mechanism or device. One nonlimiting example of such a mechanism or a device may include a wheel or other rotating member included on the seed dispenser 306 that fits within or on one or more tracks, rails, or the like located in the supports 304 such that the wheel or other rotating member glides on or within the tracks, rails, or the like to move the seed dispenser 306 relative to the supports 304.

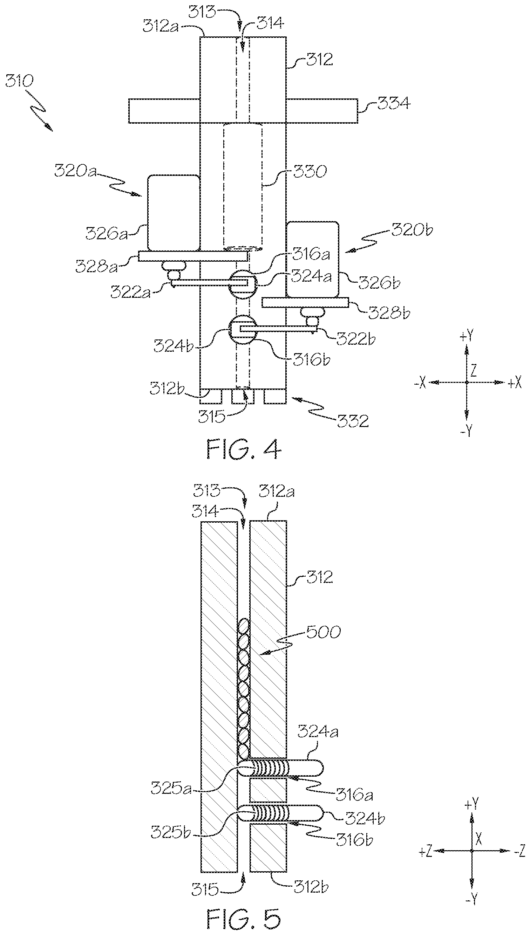

The seeder head 310 may generally be a component of the seed dispenser 306 that is located on a distal end 307 of the seed dispenser 306 that ejects one or more seeds therefrom towards a target, such as, for example, one or more of the cells 302 within the tray 106. In the embodiments shown and described herein, the seeder head 310 may generally eject seeds such that the seeds fall under force of gravity (or other force) towards the target. Additional details regarding the seeder head 310 are described with respect to FIG. 4.

FIG. 4 schematically depicts a side view of the seeder head 310 according to various embodiments. The seeder head 310 generally includes a body 312 having a proximal end 312a and a distal end 312b spaced a distance from the proximal end 312a. In addition, the seeder head 310 also has a bore 314 extending through the interior of the body 312 from the proximal end 312a to the distal end 312b of the body 312. As such, the bore 314 includes a proximal opening 313 at the proximal end 312a of the body 312 and a distal opening 315 at the distal end 312b of the body 312. Such an arrangement allows seeds that are received at the proximal opening 313 of the bore 314 to fall under force of gravity (or other force) towards the distal opening 315 of the bore 314 (i.e., in the -y direction of the coordinate axes of FIG. 4), as described in greater detail herein.

It should be understood that while embodiments herein relate to the bore 314 as being a void extending through the body 312, embodiments are not limited to such. For example, the bore 314 may be a conduit constructed of collapsible tubing or the like that extends through the body 312 in some embodiments. Other embodiments are also contemplated.

In order to selectively control movement of seeds from the proximal opening 313 of the bore 314 to the distal opening 315 of the bore 314, the seeder head 310 may further include a first hold arm 324a and a second hold arm 324b (collectively referred to as hold arms 324) disposed within the bore 314 at first and second locations between the proximal opening 313 and the distal opening 315. That is, the first hold arm 324a may be disposed within the bore 314 at a location along the length of the bore 314 between the proximal opening 313 and the distal opening 315 thereof. In addition, the second hold arm 324b may be disposed within the bore 314 at a location along the length of the bore 314 between the distal opening 315 and the location of the first hold arm 324a.

In some embodiments, the first hold arm 324a may be spaced a distance from the second hold arm 324b. In some embodiments, the distance between the first hold arm 324a and the second hold arm 324b may be based on a size of seed and a number of seeds that are to be deposited at a time. That is, the distance may be such that only a single seed of a particular size can fit between the first hold arm 324a and the second hold arm 324b within the bore 314. In the embodiments depicted herein, the distance between the first hold arm 324a and the second hold arm 324b may be such that two particularly sized seeds may fit therebetween when the hold arms 324 are extended into the bore 314. In some embodiments, the distance between the first hold arm 324a and the second hold arm 324b may be fixed such that the seeder head 310 is only configured to eject a particular size and number of seeds at a time. In other embodiments, the distance between the first hold arm 324a and the second hold arm 324b may be adjustable such that the seeder head 310 can be configured to eject differing sizes and numbers of seeds depending on a particular application.

Referring now to FIGS. 4 and 5, the first hold arm 324a and the second hold arm 324b may respectively be disposed within the bore 314 and may further extend through a first bore opening 316a and a second bore opening 316b in the body 312 such that a portion of the first hold arm 324a is coupled to a first actuator 320a and a portion of the second hold arm 324b is coupled to a second actuator 320b, as described in greater detail herein. That is, the first bore opening 316a may extend from the bore 314 to an outer edge of the body 312 and may receive the first hold arm 324a therein. In addition, the second bore opening 316b may extend from the bore 314 to an outer edge of the body 312 and may receive the second hold arm 324b therein.

It should be understood that while the first hold arm 324a and the second hold arm 324b are disposed within the bore 314, this is merely an example. In embodiments where a conduit is disposed through the body 312, the first hold arm 324a and the second hold arm 324b are disposed such that they contact an outside surface of the conduit and press against the conduit, thereby collapsing the conduit and preventing movement of seeds therethrough. In other embodiments, the first hold arm 324a and the second hold arm 324b may each, respectively be a disc with a hole therethrough. When the hole in the disc aligns with the bore 314, a passageway forms through the disc such that the seeds can pass through the disc.

Still referring to FIGS. 4 and 5, the first hold arm 324a may be biased by a first biasing assembly 325a in a direction from an outer surface of the body 312 towards the bore 314 (i.e., in the +z direction of the coordinate axes of FIG. 5). Similarly, the second hold arm 324b may be biased by a second biasing assembly 325b in a direction from an outer surface of the body 312 towards the bore 314 (i.e., in the +z direction of the coordinate axes of FIG. 5). Still referring to FIGS. 4 and 5, the first biasing assembly 325a and the second biasing assembly 325b (collectively referred to as the biasing assemblies 325) are not limited by this disclosure and may each be any device or mechanism that provides a biasing force on the first hold arm 324a and the second hold arm 324b, respectively. For example, the biasing assemblies 325 may be springs or the like that are coupled to and disposed around or adjacent to the first hold arm 324a and the second hold arm 324b, respectively, such that the biasing assemblies 325 provide the biasing force on the first hold arm 324a and the second hold arm 324b. In the embodiments depicted herein, the biasing assemblies 325 may be coupled to and disposed around a circumference of the first hold arm 324a and the second hold arm 324b respectively and disposed within the first bore opening 316a and the second bore opening 316b. In some embodiments, the biasing assemblies 325 may also be prevented from moving in the lateral direction away from the bore 314 (i.e., in the -z direction of the coordinate axes of FIG. 5) by a lip or the like located within the first bore opening 316a and the second bore opening 316b. As a result, the biasing assemblies 325 compress when the respective first hold arm 324a and second hold arm 324b coupled thereto move in the lateral direction away from the bore 314 (i.e., in the -z direction of the coordinate axes of FIG. 5).

Referring again to FIG. 4, the seeder head 310 may further include the first actuator 320a and the second actuator 320b (collectively referred to as actuators 320) disposed about the circumference of the body 312. For example, as depicted in FIG. 4, the first actuator 320a may be disposed about the circumference of the body 312 in a first location that corresponds to the first hold arm 324a such that the first actuator 320a is operable to move the first hold arm 324a, as described herein. Similarly, the second actuator 320b may be disposed about the circumference of the body 312 in a second location that corresponds to the second hold arm 324b such that the second actuator 320b is operable to move the second hold arm 324b, as described herein. In some embodiments, the body 312 may include one or more support structures for supporting the first actuator 320a and the second actuator 320b. For example, as depicted in FIG. 4, the first actuator 320a and the second actuator 320b may each, respectively, be supported by a platform 328 that extends from the body 312.

The first actuator 320a and the second actuator 320b may each, respectively, include an actuation mechanism 326 and an actuator arm 322 (e.g., the first actuator arm 322a and the second actuator arm 322b, respectively). The actuation mechanism 326 may generally be any device that, upon receiving a signal (e.g., a signal from the actuator control hardware 212 of the seeder computing device 200), causes the actuator arm 322 to move. Still referring to FIG. 4, the actuation mechanism 326 may thus be a drive component such as (but not limited to) a piezoelectric motor (e.g., a piezoelectric actuator), an electrical motor (e.g., a linear motor actuator), or an electromechanical motor (e.g., an electromechanical actuator). However, other drive components that use pneumatic and hydraulic components to move the actuator arm 322 may also be used without departing from the scope of the present disclosure. Movement of the actuator arm 322 by the actuation mechanism 326 may be completed by any means now known or later developed. For example, the actuator arm 322 and the actuation mechanism 326 may act as a linear actuator, a rotary actuator, or an oscillating actuator.

In some embodiments, the first actuator 320a and the second actuator 320b may each, respectively, actuate to move the corresponding actuator arm 322a, 322b in a single direction only. That is, when the actuators 320 are actuated, they move their respective actuator arms 322a, 322b in a first direction from an initial position. When actuation is ceased, the actuators 320 stop moving the respective actuator arms 322a, 322b in the first direction, but do not return to the initial position. Rather, a biasing force caused by the respective biasing assembly 325 may return the actuator arms 322 to the initial position. In other embodiments, the first actuator 320a and the second actuator 320b may each, respectively, actuate to move the corresponding actuator arm 322 in a first direction and in a second direction. For example, a first signal such as an electrical signal having a positive polarity may be received by one of the actuators 320 and cause the actuator 320 to move the respective actuator arm 322a, 322b in the first direction as a result. When a second signal, such as an electrical signal having a negative polarity, is received, such a signal may cause the actuator 320 to move the respective actuator arm 322a, 322b in the second direction as a result. It should be understood that in such embodiments, the biasing assemblies 325 may be omitted.

The first actuator arm 322a and the second actuator arm 322b for each of the first actuator 320a and the second actuator 320b, respectively, are generally coupled to the corresponding one of the first hold arm 324a and the second hold arm 324b. Each actuator arm 322 may be coupled such that, when the respective actuator 320 actuates, the actuator 320, via the actuator arm 322, causes the hold arm 324 to move laterally against the biasing force (i.e., in the -z direction of the coordinate axes of FIG. 5). Still referring to FIG. 4, each of the first actuator arm 322a and the second actuator arm 322b may be coupled to a respective hold arm 324 via a direct coupling, via a linkage, or the like.

While two actuators 320 are shown and described herein, the present disclosure is not limited to such. That is, a single actuator or more than two actuators may be used in some embodiments without departing from the scope of the present disclosure.

In embodiments having a plurality of seeder heads, movement of the actuators 320 may be synchronized with actuators for other seeder heads such that all of the seeder heads deposit seeds in a synchronized manner. That is, the actuators 320 on each of the plurality of seeder heads may actuate at substantially the same time to cause the seeds to pass between the first hold arm 324a and the second hold arm 324b (or between discs in some embodiments) in each seeder head at substantially the same time. Then the actuators 320 may actuate again at substantially the same time to cause the seeds to fall under force of gravity (or other force) into the respective cells at substantially the same time. As a result, an entire tray may be seeded with seeds at substantially the same time.

In various embodiments, a vibrating mechanism 330 may be coupled to at least a portion of the body 312 of the seeder head 310. The vibrating mechanism 330 may be coupled to the seeder head 310 at any location thereof. For example, the vibrating mechanism 330 may be coupled to a side of the body 312, integrated within the body 312, adjacent to the bore 314, and/or the like.

The vibrating mechanism 330 may generally be any device that vibrates the seeder head 310 and the various components thereof, particularly the bore 314. For example, the vibrating mechanism 330 may include components such as an electric motor having a driveshaft and an unbalanced mass on the driveshaft such that, when the motor rotates, the unbalanced mass results in forces that translate to vibration. The vibrating mechanism 330 may also be communicatively coupled to the seeder computing device 200 (FIG. 2) such that, upon receiving a signal from the seeder computing device 200, the vibrating mechanism 330 actuates to produce vibrations on the seeder head 310 or deactivates to cease vibrations on the seeder head 310, as described in greater detail herein.

Still referring to FIG. 4, the seeder head 310 may include one or more sensors 332 coupled thereto. The one or more sensors 332 may be positioned to sense various components of the seeder head 310 and/or the presence of seeds within the seeder head 310 or when ejected from the seeder head 310. For example, the one or more sensors 332 may be positioned with respect to the seeder head 310 to sense when a seed is ejected from the seeder head 310 and/or the number of seeds that are ejected from the seeder head 310 in a particular period of time. As such, the one or more sensors 332 may be positioned at or near the distal end 312b of the body 312.

In some embodiments, the one or more sensors 332 may be coupled to the distal end 312b of the body 312 adjacent to the distal opening 315 of the bore 314 such that seeds are detected as soon as they exit the distal opening 315 of the bore 314. In some embodiments, the one or more sensors 332 may be positioned to sense a positioning of particular components within the bore 314, such as a positioning of the first hold arm 324a and the second hold arm 324b, a positioning of seeds 500 within the bore 314 (e.g., such that a determination as to whether the seeds 500 are stuck within the bore 314, and/or the like. The one or more sensors 332 are not limited by this disclosure, and may generally be any sensors that can sense the presence, positioning, or location of objects. For example, the sensors 332 may be light based motion or ranging sensors. Other types of sensors are contemplated.

The body 312 may have a flange 334 extending therefrom in some embodiments. The flange 334 may provide a support for coupling one or more components to the seeder head 310. For example, the flange 334 may extend laterally (i.e., in the +x/-x direction of the coordinate axes of FIG. 4) from the body 312 such that bolts, screws, clips, and/or the like can be used to secure the seeder head 310 to the distal end 307 of the seed dispenser 306. In some embodiments, the flange 334 may be shaped and/or sized to correspond to a receptacle within the distal end 307 of the seed dispenser 306 such that the seeder head 310 can be inserted within the seed dispenser 306 and held in place by the seed dispenser 306. For example, the seeder head 310 may be twisted and locked into position via the flange 334 for use, but may also be removed by twisting and unlocking (e.g., to provide a capability for changing seeder heads for a particular application and/or the like).

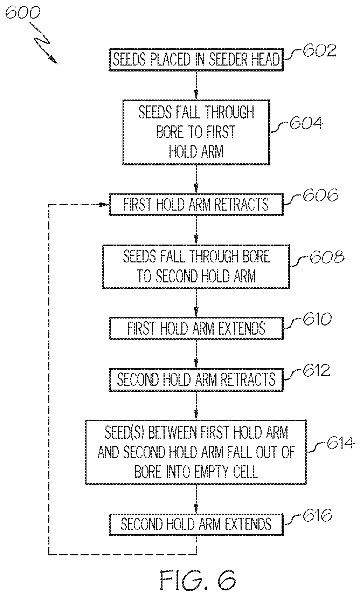

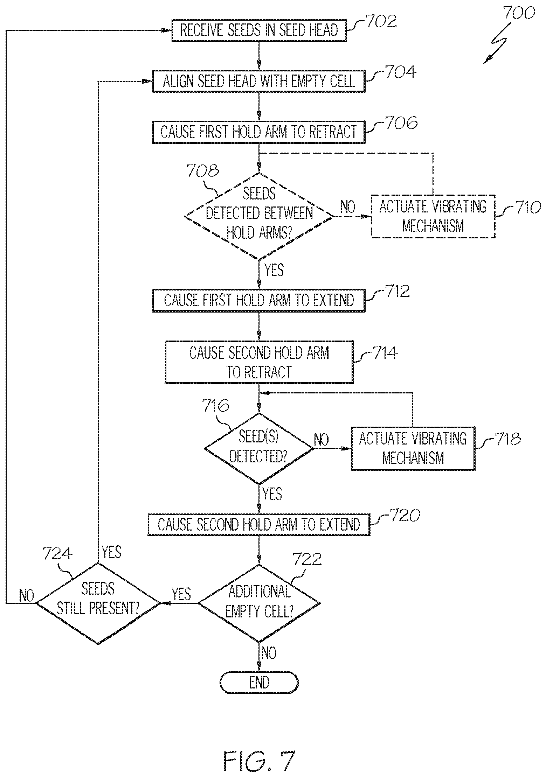

The various components described with respect to FIGS. 4 and 5 may generally function to eject a particular number of seeds 500 from the seeder head 310 such that the particular number of seeds 500 fall under force of gravity (or other force) to a target location. This movement is described in general with respect to FIG. 6 and more specifically with respect to FIG. 7.

While also referring to FIGS. 3-5, FIG. 6 depicts a flow diagram of an illustrative method of seed movement through the seeder head 310, generally designated 600. At block 602, a plurality of seeds 500 are placed in the seeder head 310. That is, the seeds 500 are moved from the seed tank 308 to the seeder head 310 via the seed dispenser 306. At block 604, the seeds 500 fall under force of gravity (or other force) through the bore 314 (i.e., in the -y direction of the coordinate axes of FIGS. 3-5) until they contact the first hold arm 324a. At block 606, the first hold arm 324a retracts, causing the plurality of seeds 500 to fall further down the bore 314 under force of gravity (or other force) until they contact the second hold arm 324b at block 608.

At block 610, the first hold arm 324a extends to block a portion of the seeds 500 from moving further downwards (e.g., all but two of the seeds 500 are blocked from moving past the first hold arm 324a in the -y direction of the coordinate axes). Subsequently, the second hold arm 324b retracts at block 612, which causes the seeds 500 that were located between the first hold arm 324a and the second hold arm 324b to fall under force of gravity (or other force) below the second hold arm 324b (i.e., further in the -y direction of the coordinate axes) and out of the distal opening 315 of the bore 314 at block 614. The second hold arm 324b extends to return the seeder head 310 to an initial position at block 616. In some embodiments, the process may repeat at block 606 if additional seeds 500 remain in the bore 314 or at block 602 if no additional seeds 500 are in the bore 314. It should be understood that the process may repeat whenever additional seeds 500 are to be deposited in a target location, and may occur after the seeder head 310 has been moved to the target location.

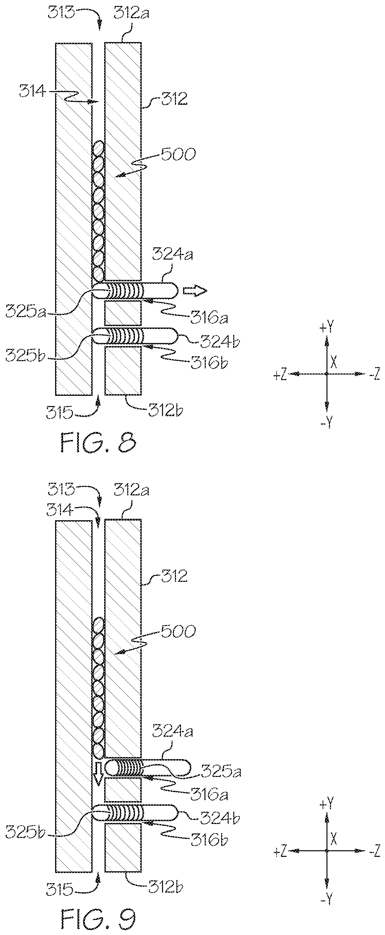

FIG. 7 depicts a flow diagram of an illustrative method for depositing one or more seeds at a target location (e.g., into an empty cell), generally designated 700. In addition, FIGS. 8-13 and 14A-14B graphically depict movement of the various components of the seeder head 310 according to the steps described with respect to FIG. 7. The processes described with respect to FIGS. 7-13 and 14A-14B may be completed by transmitting one or more signals to the various components of the seeder head 310 to cause the movements described herein. As a result of the processes described with respect to FIGS. 7-13 and 14A-14B, the seeder head 310 may be utilized to accurately deposit a particular number seeds 500 in a target area, such as the various cells 302 of a cart 104 (FIG. 3) of the assembly line grow pod 100 (FIG. 1). Moreover, the processes can be completed at a speed that is aligned with and/or corresponds to movement of the tray 106 in the assembly line grow pod 100 (FIG. 1) so as to not hinder movement thereof.

Referring now to FIGS. 7 and 8, at block 702, the seeds 500 may be received in the seeder head 310 (e.g., via the proximal opening 313 of the bore 314), as described in greater detail herein. At block 704, the seeder head 310 may be aligned with a target location, such as an empty cell or other area where seeds 500 are to be received, as described in greater detail herein.

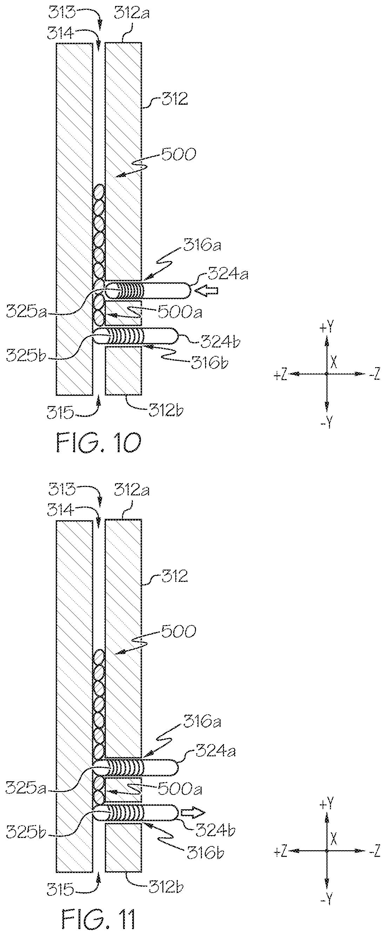

Referring to FIGS. 4, 7, and 8, a signal may be transmitted to cause the first hold arm 324a to retract at block 706. For example, a signal may be transmitted to the first actuator 320a, which actuates to move the first actuator arm 322a and correspondingly, the first hold arm 324a. The force generated by the first actuator 320a may be an amount that is sufficient to overcome the biasing force of the first biasing assembly 325a and move the first hold arm 324a laterally away from the bore 314 (i.e., in the -z direction of the coordinate axes of FIG. 8), as indicated by the arrow in FIG. 8. As a result, the seeds 500 fall in the direction of the arrow depicted in FIG. 9 under force of gravity (or other force) through the bore 314 (i.e., in the -y direction of the coordinate axes of FIG. 9) until further movement is hindered by the second hold arm 324b, as depicted in FIG. 10. Accordingly, one or more to-be-deposited seeds 500a may be positioned adjacent to the second hold arm 324b.

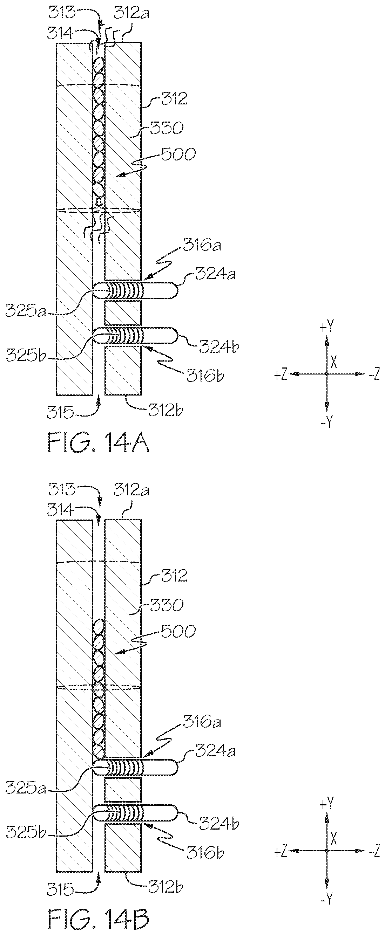

In some embodiments, such as, for example, embodiments where sensors are located within the seeder head 310 to sense movement of seeds 500 within the bore 314, a determination may be made at block 708 as to whether seeds 500 are detected between the first hold arm 324a and the second hold arm 324b. That is, one or more sensors may transmit one or more signals and/or data corresponding to sensed features, which is then used to determine the presence of the seeds 500. If the seeds 500 are not present, this may be indicative that the seeds are stuck or trapped within the bore 314. As such (and shown in FIGS. 7 and 14A), the seeds 500 may be dislodged from the stuck or trapped position within the bore by actuating the vibrating mechanism 330 at block 710. Actuating the vibrating mechanism 330 may include transmitting a signal or the like to the vibrating mechanism 330 to cause the vibrating mechanism 330 to vibrate. The vibrating mechanism 330 may be actuated such that the vibrating mechanism 330 vibrates the seeder head 310 until the seeds 500 are dislodged. In one example, this may operate as a feedback loop whereby the sensors continuously provide signals and/or data indicative of whether the seeds 500 are stuck or trapped, a decision is made based on the signals and/or data as to whether the seeds 500 are stuck or trapped, and a signal is transmitted to the vibrating mechanism 330 to continue or cease vibrating accordingly. In another example, the vibrating mechanism 330 may receive a signal and actuate, and continue to vibrate for a particular period of time. Another determination may be made as to whether the seeds 500 have been dislodged, and if not, another signal may be transmitted to the vibration mechanism 330 to actuate. As such, the process may repeat at block 708 until the seeds 500 become dislodged, as shown in FIG. 14B. It should be understood that the processes described with respect to blocks 708 and 710 are optional and may not be completed in some embodiments.

Referring now to FIGS. 4, 7, and 10, a signal may be transmitted to cause the first hold arm 324a to extend at block 712. For example, a signal may be transmitted to the first actuator 320a, which actuates to move the first actuator arm 322a and correspondingly, the first hold arm 324a. In another example, a signal may be transmitted to the first actuator 320a to direct the first actuator 320a to cease actuating, which causes the force caused by the first actuator 320a to cease. As a result, the biasing force caused by the first biasing assembly 325a (or alternatively, a force provided by the first actuator 320a) may cause the first hold arm 324a to move laterally toward the bore 314 (i.e., in the +z direction of the coordinate axes of FIG. 10), as indicated by the arrow in FIG. 10. Accordingly, as shown in FIG. 11, the one or more to-be-deposited seeds 500a are separated from the remainder of the seeds 500 by the first hold arm 324a. In addition, the one or more to-be-deposited seeds 500a are present between the first hold arm 324a and the second hold arm 324b. The one or more to-be-deposited seeds 500a represents the seeds 500 that are to be deposited in the particular location of the tray 106 (FIG. 3).

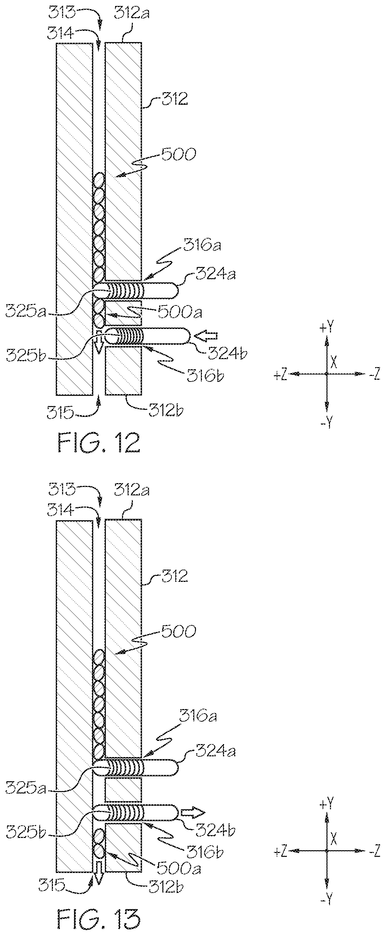

Referring to FIGS. 4, 7, and 11, a signal may be transmitted to cause the second hold arm to retract at block 714. For example, a signal may be transmitted to the second actuator 320b, which actuates to move the second actuator arm 322b and correspondingly, the second hold arm 324b. The force generated by the second actuator 320b may be an amount that is sufficient to overcome the biasing force of the second biasing assembly 325b and move the second hold arm 324b laterally away from the bore 314 (i.e., in the -z direction of the coordinate axes of FIG.11), as indicated by the arrow in FIG. 11. As a result, the seeds 500 fall in the direction of the arrow depicted in FIG. 12 under force of gravity (or other force) through the bore 314 (i.e., in the -y direction of the coordinate axes of FIG. 12) such that the seeds fall out of the distal opening 315 of the bore 314, as shown in FIG. 13.

A determination may be made at block 716 as to whether seeds 500 are detected as exiting the bore 314 through the distal opening 315 of the bore 314. That is, the one or more sensors 332 may transmit one or more signals and/or data corresponding to sensed features, which is then used to determine the presence of the seeds 500. If the seeds 500 are not sensed, this may be indicative that the seeds are stuck or trapped within the bore 314. As such, the seeds 500 may be dislodged from the stuck or trapped position within the bore by actuating the vibrating mechanism 330 at block 718, as described in greater detail herein. The process may then return to block 716 for further detection.

If the seeds are detected, the process may continue at block 720. Referring now to FIGS. 4, 7, and 10, a signal may be transmitted to cause the second hold arm 324b to extend at block 720. For example, a signal may be transmitted to the second actuator 320b, which actuates to move the second actuator arm 322b and correspondingly, the second hold arm 324b. In another example, a signal may be transmitted to the second actuator 320b to direct the second actuator 320b to cease actuating, which causes the force caused by the second actuator 320b to cease. As a result, the biasing force caused by the second biasing assembly 325b (or alternatively, a force provided by the second actuator 320b) may cause the second hold arm 324b to move laterally toward the bore 314 (i.e., in the +z direction of the coordinate axes of FIG. 13).

Referring now to FIGS. 7 and 13, a determination may be made as to whether any additional empty cells exist for which seeds 500 should be deposited. For example, additional empty cells may exist in a tray that has not been completely seeded. Such a determination may be made by sensing the presence or lack thereof of seeds within the cells of a tray. If no additional empty cells exist (e.g., because all of the cells to be filled have been filled and/or detected as filled), the process may end. If additional empty cells exist, the process may proceed to block 724.

At block 724, a determination may be made as to whether seeds 500 are still present in the bore 314. For example, the determination may be completed by sensing various portions of the seeder head 310 (e.g., the bore 314) for the presence of seeds therein. If seeds 500 are not present, the process may return to block 702. If seeds 500 are present, the process may return to block 704.

As illustrated above, various embodiments for depositing seeds are disclosed. The embodiments described herein allow for an accurate placement of seeds in a target location, such as individual cells in a tray on a cart supported on a track in an industrial grow pod. Accurate placement is achieved by coordinating movement of the hold arms and by positioning the hold arms relative to one another such that a particular number of seeds can be held between extended hold arms. In addition, accurate placement of seeds is also achieved by moving the seeder head to a location above the target object. The mechanisms described herein can be operated to quickly place seeds so as to ensure that empty cells in a tray are seeded to keep the assembly line grow pod moving in a timely manner. In addition, multiple seeder heads can be used at once for even quicker placement.

While particular embodiments and aspects of the present disclosure have been illustrated and described herein, various other changes and modifications can be made without departing from the scope of the claims. Moreover, although various aspects have been described herein, such aspects need not be utilized in combination.

It should now be understood that embodiments disclosed herein include devices, systems, and methods, and non-transitory computer-readable mediums for depositing seeds into cells of a tray coupled to a cart supported on a track of an industrial grow pod. It should also be understood that these embodiments are merely exemplary and are not intended to limit the scope of this disclosure.

## Claims

1. A seeder head (310) comprising:
a body (312) having a proximal end (312a) and a distal end (312b) spaced a distance from the proximal end (312a);
a bore (314) extending through an interior of the body (312) from the proximal end (312a) to the distal end (312b), the bore comprising a proximal opening (313) at the proximal end(312a) and a distal opening (315) at the distal end (312b);
a first hold arm (324a) disposed within the bore (314) between the proximal end and the distal end; and
a second hold arm (324b) disposed within the bore between the distal end and the first hold arm, ,
wherein:
the bore (314) is shaped and sized to receive a plurality of seeds at the proximal opening,
the seeder head being **characterized in that**
the first hold arm is coupled to a first actuator (320a);
the second hold arm is coupled to a second actuator (320b);
wherein the first hold arm and the second hold arm are movable by the first actuator and the second actuator to selectively allow one or more of the plurality of seeds to fall under force of gravity to the distal opening of the bore.

2. The seeder head of claim 1, further comprising a flange arranged to couple the seeder head (310) to a seed dispenser (306) of a seeder component of an assembly line grow pod.

3. The seeder head of claim 1, further comprising a vibrating mechanism (330) that vibrates the seeder head.

4. The seeder head of claim 1, further comprising:
a first biasing assembly (325a) coupled to the first hold arm, wherein the first biasing assembly biases the first hold arm towards the bore; and
a second biasing assembly (325b) coupled to the second hold arm, wherein the second biasing assembly biases the second hold arm towards the bore.

5. The seeder head of claim 1, further comprising:
a first bore opening extending from the bore to an outer surface of the body, the first bore opening receiving the first hold arm therein; and
a second bore opening extending from the bore to an outer surface of the body, the second bore opening receiving the second hold arm therein.

6. The seeder head of claim 1, wherein the first hold arm is spaced relative to the second hold arm such that a distance between the first hold arm and the second hold arm can be adjusted to correspond to a shape and size of the one or more of the plurality of seeds.

7. A method for depositing one or more seeds in an empty cell of a tray (106) in an assembly line grow pod (100), the method comprising:
receiving a plurality of seeds in a bore (314) of a seeder head (310) by moving the seeds from a seed tank (308) to the seeder head via a seeder dispenser (306);
the seeds fall through the bore until they contact a first hold arm (324a);
causing the first hold arm (324a) disposed in the bore of the seeder head to retract from the bore so that the plurality of seeds fall to a second hold arm (324b) disposed in the bore of the seeder head between the first hold arm and a distal opening in the bore;
causing the first hold arm to extend into the bore to separate the one or more seeds from the plurality of seeds and to block a portion of the seeds from moving further downwards; the method being **characterized by**
causing the second hold arm to subsequently retract from the bore so that the one or more seeds, that were located between the first and the second hold arm, fall
out of the distal opening in the bore;
and the second hold arm extends to return the seeder head to an initial position.

8. The method of claim 7, further comprising aligning the seeder head with the empty cell.

9. The method of claim 7, further comprising detecting that the plurality of seeds is stuck in the bore.

10. The method of claim 9, further comprising actuating a vibrating mechanism coupled to the seeder head such that the vibrating mechanism vibrates the seeder head to dislodge the plurality of seeds.

11. The method of claim 7, wherein:
causing the first hold arm to retract comprises actuating a first actuator coupled to the first hold arm; and
causing the second hold arm to retract comprises actuating a second actuator coupled to the second hold arm.

12. A seeder component (108) for an assembly line grow pod, the seeder component comprising:
a seeder computing device (200); and
a seeder head (310) according to any of the claims 1-6,
wherein the first actuator is communicatively coupled to the seeder computing device, the second actuator is communicatively coupled to the seeder computing device and the seeder computing device directs the first actuator to move the first hold arm and the second actuator to move the second hold arm to selectively allow one or more of the plurality of seeds to fall under force of gravity to the distal opening of the bore.

13. The seeder component of claim 12, further comprising a seed dispenser comprising the seeder head.

14. The seeder component of claim 13, wherein the seeder component is arranged to receive a tray comprising a plurality of cells.

15. The seeder component of claim 14, wherein the seed dispenser is movable relative to the tray comprising the plurality of cells.

## Patentansprüche

1. Sämaschinenkopf (310) umfassend:
einen Körper (312) mit einem proximalen Ende (312a) und einem distalen Ende (312b) beabstandet vom proximalen Ende (312a);
eine Bohrung (314), die sich durch das Innere des Körpers (312) vom proximalen Ende (312a) zum distalen Ende (312b) erstreckt, wobei die Bohrung eine proximale Öffnung (313) am proximalen Ende (312a) und eine distale Öffnung (315) am distalen Ende (312b) aufweist;
einen ersten Haltearm (324a), der in der Bohrung (314) zwischen dem proximalen Ende und dem distalen Ende angeordnet ist; und
einen zweiten Haltearm (324b), der in der Bohrung zwischen dem distalen Ende und dem ersten Haltearm angeordnet ist,
wobei:
die Bohrung (314) geformt und dimensioniert ist, um eine Mehrheit von Samen an der proximalen Öffnung aufzunehmen,
wobei der Sämaschinenkopf **dadurch gekennzeichnet ist, dass** der erste Haltearm mit einem ersten Aktuator (320a) gekoppelt ist;
der zweite Haltearm mit einem zweiten Aktuator (320b) gekoppelt ist;
wobei der erste Haltearm und der zweite Haltearm durch den ersten Aktuator und den zweiten Aktuator bewegbar sind, damit ein oder mehrere der Mehrheit von Samen durch die Schwerkraft in die distale Öffnung der Bohrung selektiv fallen können.

2. Sämaschinenkopf nach Anspruch 1, weiter umfassend einen Flansch, der dafür eingerichtet ist, den Sämaschinenkopf (310) mit einer Samenabgabevorrichtung (306) einer Sämaschinenkomponente eines Anzuchtbehälters eines Fertigungsbands zu koppeln.

3. Sämaschinenkopf nach Anspruch 1, weiter umfassend einen vibrierenden Mechanismus (330), der den Sämaschinenkopf vibriert.

4. Sämaschinenkopf nach Anspruch 1, weiter umfassend:
eine erste Vorspannungsanordnung (325a), die mit dem ersten Haltearm gekoppelt ist, wobei die erste Vorspannungsanordnung den ersten Haltearm gegen die Bohrung vorspannt; und
eine zweite Vorspannungsanordnung (325b), die mit dem zweiten Haltearm gekoppelt ist, wobei die zweite Vorspannungsanordnung den zweiten Haltearm gegen die Bohrung vorspannt.

5. Sämaschinenkopf nach Anspruch 1, weiter umfassend:
eine erste Bohrungsöffnung, die sich von der Bohrung zu einer Außenfläche des Körpers erstreckt, wobei die erste Bohrungsöffnung den ersten Haltearm darin aufnimmt; und
eine zweite Bohrungsöffnung, die sich von der Bohrung zu einer Außenfläche des Körpers erstreckt, wobei die zweite Bohrungsöffnung den zweiten Haltearm darin aufnimmt.

6. Sämaschinenkopf nach Anspruch 1, wobei der erste Haltearm im Verhältnis zum zweiten Haltearm beabstandet ist, so dass ein Abstand zwischen dem ersten Haltearm und dem zweiten Haltearm eingestellt werden kann, damit er einer Form und Größe des einen oder mehrerer der Mehrheit von Samen entspricht.

7. Verfahren zum Ablagern von einem oder mehreren Samen in einer leeren Zelle einer Ablage (106) in einem Anzuchtbehälter eines Fertigungsbands (100), welches Verfahren Folgendes umfasst:
Aufnehmen einer Mehrheit von Samen in einer Bohrung (314) eines Sämaschinenkopfs (310) durch Bewegen der Samen von einem Samenbehälter (308) zum Sämaschinenkopf über die Samenabgabevorrichtung (306);
die Samen fallen durch die Bohrung bis sie mit einem ersten Haltearm (324a) in Kontakt kommen;
Bewirken, dass der erste Haltearm (324a), der in der Bohrung des Sämaschinenkopfs angeordnet ist, sich von der Bohrung zurückzieht, so dass die Mehrheit von Samen zu einem zweiten Haltearm (324b) fallen, der in der Bohrung des Sämaschinenkopfs zwischen dem ersten Haltearm und einer distalen Öffnung in der Bohrung angeordnet ist;
Bewirken, dass der erste Haltearm sich in die Bohrung erstreckt zum Trennen des einen oder mehrerer Samen von der Mehrheit von Samen und einen Teil der Samen zu blockieren, damit sie sich nicht weiter nach unten bewegen;
wobei das Verfahren **gekennzeichnet ist durch**
Bewirken, dass der zweite Haltearm sich nachfolgend von der Bohrung zurückzieht, so dass der eine oder mehrere Samen, die sich zwischen dem ersten und dem zweiten Haltearm befinden, aus der distalen Öffnung in der Bohrung herausfallen;
und der zweite Haltearm verlängert sich zum Zurückschicken des Sämaschinenkopfs in eine Anfangsposition.

8. Verfahren nach Anspruch 7, weiter umfassend Ausrichten des Sämaschinenkopfs im Verhältnis zu einer leeren Zelle.

9. Verfahren nach Anspruch 7, weiter umfassend das Nachweisen, dass die Mehrheit von Samen in der Bohrung stecken.

10. Verfahren nach Anspruch 9, weiter umfassend die Aktivierung eines vibrierenden Mechanismus, der mit dem Sämaschinenkopf gekoppelt ist, so dass der vibrierende Mechanismus den Sämaschinenkopf vibriert, um die Mehrheit von Samen zu vertreiben.

11. Verfahren nach Anspruch 7, wobei:
das Bewirken, dass der erste Haltearm sich zurückzieht die Aktivierung eines ersten Aktuators umfasst, der mit dem ersten Haltearm gekoppelt ist; und
das Bewirken, dass der zweite Haltearm sich zurückzieht die Aktivierung eines zweiten Aktuators umfasst, der mit dem zweiten Haltearm gekoppelt ist.

12. Sämaschinenkomponente (108) für einen Anzuchtbehälter eines Fertigungsbands, wobei die Sämaschinenkomponente Folgendes umfasst:
eine Sämaschinenberechnungsvorrichtung (200); und
einen Sämaschinenkopf (310) nach einem der Ansprüche 1-6, wobei der erste Aktuator mit der Sämaschinenberechnungsvorrichtung kommunikativ gekoppelt ist, der zweite Aktuator mit der Sämaschinenberechnungsvorrichtung kommunikativ gekoppelt ist, und
die Sämaschinenberechnungsvorrichtung leitet den ersten Aktuator zum Bewegen des ersten Haltearms und den zweiten Aktuator zum Bewegen des zweiten Haltearms, damit ein oder mehrere der Mehrheit von Samen durch die Schwerkraft in die distale Öffnung der Bohrung selektiv fallen können.

13. Sämaschinenkomponente nach Anspruch 12, weiter umfassend eine Samenabgabevorrichtung umfassend den Sämaschinenkopf.

14. Sämaschinenkomponente nach Anspruch 13, wobei die Sämaschinenkomponente dafür eingerichtet ist, eine Ablage mit einer Mehrheit von Zellen aufzunehmen.

15. Sämaschinenkomponente nach Anspruch 14, wobei die Samenabgabevorrichtung im Verhältnis zur Ablage mit der Mehrheit von Zellen bewegbar ist.

## Revendications

1. Tête de semoir (310) comprenant :
un corps (312) ayant une extrémité proximale (312a) et une extrémité distale (312b) espacée à une certaine distance de l'extrémité proximale (312a) ;
un alésage (314) s'étendant à travers un intérieur du corps (312) depuis l'extrémité proximale (312a) jusqu'à l'extrémité distale (312b), l'alésage comprenant une ouverture proximale (313) au niveau de l'extrémité proximale (312a) et une ouverture distale (315) au niveau de l'extrémité distale (312b) ;
un premier bras de maintien (324a) disposé à l'intérieur de l'alésage (314) entre l'extrémité proximale et l'extrémité distale ; et
un deuxième bras de maintien (324b) disposé à l'intérieur de l'alésage entre l'extrémité distale et le premier bras de maintien ;
dans laquelle :
l'alésage (314) est formé et dimensionné pour recevoir une pluralité de graines au niveau de l'ouverture proximale,
la tête de semoir étant **caractérisée en ce que**
le premier bras de maintien est couplé à un premier actionneur (320a) ;
le deuxième bras de maintien est couplé à un deuxième actionneur (320b) ;
dans laquelle le premier bras de maintien et le deuxième bras de maintien sont déplaçables par le premier actionneur et le deuxième actionneur pour permettre sélectivement à une ou plusieurs de la pluralité de graines de tomber sous l'effet de la gravité vers l'ouverture distale de l'alésage.

2. Tête de semoir selon la revendication 1, comprenant en outre une bride agencée pour coupler la tête de semoir (310) à un distributeur de graines (306) d'un composant de semoir d'un module de culture de ligne d'assemblage.

3. Tête de semoir selon la revendication 1, comprenant en outre un mécanisme vibrant (330) qui fait vibrer la tête de semoir.

4. Tête de semoir selon la revendication 1, comprenant en outre :
un premier ensemble de sollicitation (325a) couplé au premier bras de maintien, le premier ensemble de sollicitation sollicitant le premier bras de maintien vers l'alésage ; et
un deuxième ensemble de sollicitation (325b) couplé au deuxième bras de maintien, le deuxième ensemble de sollicitation sollicitant le deuxième bras de maintien vers l'alésage.

5. Tête de semoir selon la revendication 1, comprenant en outre :
une première ouverture d'alésage s'étendant depuis l'alésage jusqu'à une surface extérieure du corps, la première ouverture d'alésage recevant le premier bras de maintien à l'intérieur ; et
une deuxième ouverture d'alésage s'étendant depuis l'alésage jusqu'à une surface extérieure du corps, la deuxième ouverture d'alésage recevant le deuxième bras de maintien à l'intérieur.

6. Tête de semoir selon la revendication 1, dans laquelle le premier bras de maintien est espacé par rapport au deuxième bras de maintien de telle sorte qu'une distance entre le premier bras de maintien et le deuxième bras de maintien puisse être ajustée pour correspondre à une forme et à une taille de l'une ou de plusieurs de la pluralité des graines.

7. Procédé pour déposer une ou plusieurs graines dans une cellule vide d'un plateau (106) dans un module de culture de ligne d'assemblage (100), le procédé comprenant les étapes consistant à :
recevoir une pluralité de graines dans un alésage (314) d'une tête de semoir (310) en déplaçant les graines d'un réservoir de graines (308) à la tête de semoir via le distributeur de graines (306) ;
les graines tombent à travers l'alésage jusqu'à ce qu'elles soient en contact avec un premier bras de maintien (324a) ;
amener le premier bras de maintien (324a) disposé dans l'alésage de la tête de semoir à se rétracter de l'alésage de telle sorte que la pluralité de graines tombent vers un deuxième bras de maintien (324b) disposé dans l'alésage de la tête de semoir entre le premier bras de maintien et une ouverture distale dans l'alésage ;
amener le premier bras de maintien à s'étendre dans l'alésage pour séparer la ou les graines de la pluralité de graines et pour bloquer une partie des graines pour qu'elles ne se déplacent pas davantage vers le bas ; ledit procédé étant **caractérisé par** l'étape consistant à
amener le deuxième bras de maintien à se rétracter de l'alésage ultérieurement de telle sorte que la ou les graines qui étaient situées entre le premier et le deuxième bras de maintien, tombent hors de l'ouverture distale dans l'alésage ;
et le deuxième bras de maintien s'étend pour retourner la tête de semoir à une position initiale.

8. Procédé selon la revendication 7, comprenant en outre l'alignement de la tête de semoir avec la cellule vide

9. Procédé selon la revendication 7, comprenant en outre la détection du fait que la pluralité de graines est coincée dans l'alésage.

10. Procédé selon la revendication 9, comprenant en outre l'actionnement d'un mécanisme vibrant couplé à la tête de semoir de telle sorte que le mécanisme vibrant fasse vibrer la tête de semoir pour déloger la pluralité de graines.

11. Procédé selon la revendication 7, dans lequel :
l'étape consistant à amener le premier bras de maintien à se rétracter comprend l'actionnement d'un premier actionneur couplé au premier bras de maintien ; et
l'étape consistant à amener le deuxième bras de maintien à se rétracter comprend l'actionnement d'un deuxième actionneur couplé au deuxième bras de maintien.

12. Composant de semoir (108) pour un module de culture de ligne d'assemblage, le composant de semoir comprenant :
un dispositif informatique de semoir (200) ; et
une tête de semoir (310) selon l'une quelconque des revendications 1 à 6,
dans lequel le premier actionneur est couplé en communication au dispositif informatique de semoir, le deuxième actionneur est couplé en communication au dispositif informatique de semoir, et
le dispositif informatique de semoir ordonne au premier actionneur de déplacer le premier bras de maintien et au deuxième actionneur de déplacer le deuxième bras de maintien pour permettre sélectivement à une ou plusieurs de la pluralité de graines de tomber sous l'effet de la gravité vers l'ouverture distale de l'alésage.

13. Composant de semoir selon la revendication 12, comprenant en outre un distributeur de graines comprenant la tête de semoir.

14. Composant de semoir selon la revendication 13, dans lequel le composant de semoir est agencé pour recevoir un plateau comprenant une pluralité de cellules.

15. Composant de semoir selon la revendication 14, dans lequel le distributeur de graines est mobile par rapport au plateau comprenant la pluralité de cellules.
